(19) Europäisches Patentamt
European Patent Office
Office européen des brevets

(11) **EP 0 865 222 B1**

(12) **EUROPÄISCHE PATENTSCHRIFT**

(45) Veröffentlichungstag und Bekanntmachung des Hinweises auf die Patenterteilung:
**02.05.2007  Patentblatt 2007/18**

(51) Int Cl.:
***H04Q 7/38*** *(2006.01)*

(21) Anmeldenummer: **97104421.9**

(22) Anmeldetag: **14.03.1997**

(54) **Verfahren und Einrichtung zum Betrieb von Funksystemen mit mehreren Frequenzbändern**

Method and device for operation of radio systems with a plurality of frequency bands

Procédé et dispositif d'opération des réseaux radio avec plusieurs bandes de fréquences

(84) Benannte Vertragsstaaten:
**DE DK ES FR GB IT NL SE**

(43) Veröffentlichungstag der Anmeldung:
**16.09.1998  Patentblatt 1998/38**

(73) Patentinhaber: **SIEMENS AKTIENGESELLSCHAFT**
**80333 München (DE)**

(72) Erfinder:
• **Nasshan, Markus, Dr.-Ing.**
  **46395 Bocholt (DE)**
• **Klein, Anja, Dr.-Ing.**
  **80999 München (DE)**

(56) Entgegenhaltungen:
**WO-A-96/33587**            **WO-A-96/33589**

**Beschreibung**

Die Erfindung bezieht sich auf ein Verfahren und eine Einrichtung zum Betrieb von Funksystemen.

In Funksystemen - vgl. hierzu WO-A-96 33 589 - werden Nachrichten (beispielsweise Sprache und Daten) mit Hilfe von elektromagnetischen Wellen übertragen. Das Abstrahlen der elektromagnetischen Wellen erfolgt dabei mit Trägerfrequenzen, die in dem für das jeweilige System vorgesehenen Frequenzband liegen. Im GSM liegen die Trägerfrequenzen beziehungsweise das Frequenzband beispielsweise im Bereich von 900 MHz. Die abgestrahlten elektromagnetischen Wellen werden aufgrund von Verlusten durch Reflexion, Beugung, Abstrahlung infolge der Erdkrümmung und dergleichen gedämpft. Im allgemeinen gilt, daß die Dämpfung mit zunehmender Trägerfrequenz zunimmt. Infolgedessen sinkt die Empfangsleistung, die dem Nachrichtendetektor im Empfänger zur Verfügung steht, mit zunehmender Trägerfrequenz aufgrund der frequenzabhängigen Dämpfung.

In den Empfängern von Funksystemen werden Antennen verwendet, die einen Antennengewinn haben, der von der Trägerfrequenz der zu empfangenden elektromagnetischen Wellen abhängt. Es gilt, daß der Antennengewinn mit zunehmender Trägerfrequenz abnimmt. Infolgedessen sinkt die dem Nachrichtendetektor zur Verfügung stehende Empfangsleistung mit zunehmender Trägerfrequenz aufgrund des frequenzabhängigen Antennengewinns der Empfangsantenne.

Zur Sicherstellung einer bestimmten Qualität der übertragenen Nachrichten ist bei der Nachrichtendetektion in den Empfängern eine bestimmte minimale Empfangsleistung Pmin notwendig. Diese Empfangsleistung ist im allgemeinen von der jeweiligen Art der Nachrichtenübertragung, beispielsweise der Übertragung von Sprache und Daten mit unterschiedlichen Bitfehlerratenanforderungen, dem Rauschen und der Interferenz, abhängig. Bei einer festen Trägerfrequenz sinkt beim Überschreiten einer bestimmten Entfernung rmax zwischen Sender und Empfänger die dem Nachrichtendetektor zur Verfügung stehende Empfangsleistung P unter die minimale Empfangsleistung Pmin ab. Diese Entfernung, bei der die Empfangsleistung P unter die minimale Empfangsleistung Pmin sinkt, wird auch als maximale Reichweite rmax bezeichnet. Die maximale Reichweite rmax ist ebenfalls von der jeweiligen Art der Nachrichtenübertragung, dem Rauschen und der Interferenz abhängig.

Aus dem Gesagten ergibt sich, daß bei einer bestimmten Anforderung an die Qualität der übertragenen Nachrichten im allgemeinen die maximale Grenzreichweite rmax mit zunehmender Trägerfrequenz sinkt. Die maximale Reichweite rmax ist in realen Funksystemen von großer Bedeutung, da die maximale Reichweite rmax bestimmt, wie groß Funkzellen im reichweitenbegrenzten Betrieb sind. Es gilt, daß die Funkzellen um so kleiner dimensioniert werden müssen, je kleiner die maximale Reichweite rmax ist. Reichweitenbegrenzte Funkzellen treten beispielsweise in ländlichen Gebieten auf. Weiterhin kann eine Reichweitenbegrenzung für Dienste mit hoher Bitrate und/oder hoher Qualitätsanforderung auftreten im Vergleich zu Diensten mit niedriger Bitrate und niedriger Qualitätsanforderung.

Aufgrund der Bewegung der Sender und/oder Empfänger und/oder von beugenden, streuenden, reflektierenden Objekten ist der Übertragungskanal zeitvariant. Es tritt der sog. Dopplereffekt, d.h. eine Frequenzverschiebung auf. Die Frequenzverschiebung ist um so stärker ausgeprägt, je höher die Geschwindigkeit von Sender, Empfänger und sich bewegenden Objekten ist. Der maximale Betrag der Dopplerfrequenz bei einer einfachen Anordnung mit beispielsweise bewegtem Sender und ortsfestem Empfänger ist gegeben durch

$$f_d = (v \; f_0) \; / \; c_0,$$

wobei v der Betrag der Geschwindigkeit, fo die Trägerfrequenz und co die Lichtgeschwindigkeit ist. Infolgedessen ist die Zeitvarianz des Übertragungskanals um so ausgeprägter beziehungsweise die Dopplerfrequenz ist um so höher, je höher die Trägerfrequenz ist.

Zur Sicherstellung einer bestimmten Qualität der übertragenen Nachrichten ist es erforderlich, daß die zeitlichen Veränderungen des Übertragungkanals in den Empfängern erfaßt werden und diese Veränderungen bei der Nachrichtendetektion berücksichtigt werden. Dies erfordert eine Adaptation des Empfängers. Eine solche Adaptation ist um so schwieriger und schlechter möglich beziehungsweise um so aufwendiger, je schneller die zeitlichen Veränderungen sind. Die Geschwindigkeit der zeitlichen Veränderung nimmt aber mit zunehmender Trägerfrequenz zu.

Eine Adaptation wird dadurch erreicht, daß im Empfänger eine Schätzung des Übertragungskanals durchgeführt wird und dieses Wissen über die Übertragungseigenschaften des Übertragungskanals bei der Nachrichtendetektion vorteilhaft eingesetzt wird. Beispielsweise verwenden GSM und JD-CDMA Trainingssequenzen (Midamblen), mit denen die Impulsantworten der Mobilfunkkanäle geschätzt werden. In konventionellen DS-(Direct Sequence)-CDMA Mobilfunksystemen, beispielsweise IS-95, werden Pilot-Signale verwendet, um die Kanaleigenschaften des Mobilfunkkanals zu ermitteln. Im GSM werden die Kanalimpulsantworten zur Einstellung der Multiplikatoren bei der Metrikbildung des Viterbi-Detektors verwendet. In einem Breitband-TDMA-System mit einem DFE-Equalizer (Decision Feedback Equalizer) werden die Kanalimpulsantworten verwendet, um die Filterkoeffizienten der Feedforward- und Feedback-Filter zu berechnen. In einem Breitband-TDMA-System mit einem DFSE (Decision Feedback Sequence Estimator) gilt Analoges. Beim IS-95 wird das Wissen über die Kanalimpulsantworten zur "Justierung" oder "Einstellung" der Rake-Finger verwendet.

Die Tatsache, daß eine solche Adaption um so schwieriger und schlechter möglich beziehungsweise um so aufwendiger ist, je schneller die zeitlichen Veränderungen sind, kann sich in den o.g. Fällen auf verschiedene Art äußern. Da die Geschwindigkeit der zeitlichen Veränderung mit zunehmender Trägerfrequenz zunimmt, kann ein zunehmender Aufwand beispielsweise bedeuten, daß Trainingssequenzen häufiger, also in kürzeren zeitlichen Abständen gesendet werden müssen. Damit nimmt die insgesamt prozentual für die Datenübertragung zur Verfügung stehende Zeit ab. Ein zunehmender Aufwand kann weiterhin bedeuten, daß die im Empfänger in den mathematischen Operationen verwendeten Zahlenwerte häufiger aktualisiert werden müssen, wodurch der Rechenaufwand steigt, und daß ein Tracking des Kanals schwieriger zu realisieren ist.

Zukünftig kann der Fall auftreten, daß dem Betreiber eines Funknetzes mehrere Frequenzbänder in unterschiedlichen Frequenzlagen zur Verfügung stehen. Beispielsweise ist denkbar, daß einem GSM-Betreiber neben seinem derzeitigen GSM-Frequenzband um 900 MHz zukünftig für ein zukünftiges System, beispielsweise das UMTS (Universal Mobile Telecommunications System), ein Frequenzband um 2 GHz zur Verfügung steht. Insbesondere für Mobilfunksysteme der dritten Generation (beispielsweise UMTS) ergeben sich dann die oben genannten Probleme mit frequenzabhängigen Dämpfungsfaktoren und mit sich schnell bewegenden Mobilstationen.

Der Erfindung liegt die Aufgabe zugrunde, unter den physikalischen Randbedingungen das Funksystem des Netzbetreibers so zu konfigurieren, daß auf möglichst optimale Weise die erforderliche Übertragungsqualität und/oder maximale Reichweite für verschiedene Verbindungen sichergestellt werden kann.

Erfindungsgemäß wird diese Aufgabe durch das Verfahren mit den Merkmalen des Patentanspruches 1 und die Einrichtung mit den Merkmalen des Patentanspruches 15 gelöst.

Wenn einem Funknetzbetreiber N Frequenzbänder F1, ..., FN zur Verfügung stehen, wird gemäß einem Kriterium, dessen Erfüllheitsgrad durch gemessene Größen bestimmt werden kann, in einem der Szenarien festgelegt, welches Frequenzband für die Signalübertragung verwendet werden soll beziehungsweise es wird festgelegt, ob und wann während einer Verbindung zu einem anderen Frequenzband gewechselt werden oder wie die Frequenzzuordnung erfolgen soll. Es kann nämlich vorteilhaft sein, gewisse Kontrollkanäle, deren Frequenzen vorweg gewählt worden sind, auf der hohen/niedrigen Frequenz zu senden, wobei ein Kontrollkanal, der eine hohe Reichweite erfordert, beispielsweise auf einer niedrigen Frequenz gesendet werden kann. Damit wird erreicht, daß die vorhandenen Funkkanäle des Funksystems optimal ausgenutzt werden beziehungsweise die Übertragungsqualität und/oder die Reichweite für verschiedene Verbindungen optimiert wird.

Bei der vorteilhaften Ausgestaltung der Erfindung gemäß Anspruch 2 wird davon ausgegangen, daß die Dämpfung immer mit zunehmender Trägerfrequenz zunimmt, und daß nur Dienste mit gleicher Bitrate und Qualitätsanforderung aktiv sind. Mit dieser einfachen Voraussetzung, die in einer Reihe von Szenarien in guter Näherung zutreffen, kann die Funkkanal- beziehungsweise Frequenzbandzuordnung ohne hohen Rechenaufwand in einfacher Weise erfolgen, da die Teilnehmer im wesentlichen nach der Entfernung von der Feststation gruppiert werden.

Bei der vorteilhaften Ausgestaltung der Erfindung nach Anspruch 3 wird davon ausgegangen, daß die Dämpfung mit zunehmender Trägerfrequenz zunimmt und daß Dienste mit verschiedener Bitrate und/oder Qualitätsanforderung aktiv sind. Die Teilnehmer werden nach der Entfernung des Teilnehmers von der Feststation und unter Berücksichtigung der Qualitätsanforderung und der Bitraten gruppiert, was wiederum einer Reihe von Szenarien gerecht wird und effizient durchzuführen ist.

Bei der vorteilhaften Ausgestaltung der Erfindung nach Anspruch 4 wird davon ausgegangen, daß die Geschwindigkeitsabhängigkeit immer mit zunehmender Trägerfrequenz zunimmt, und daß Dienste mit gleicher Bitrate und Qualitätsanforderung aktiv sind. In diesem Fall wird nach der Geschwindigkeit gruppiert, mit der sich die Mobilstationen gegenüber der Feststation bewegen.

Bei der vorteilhaften Ausgestaltung der Erfindung nach Anspruch 5 können die Kenngrößen und die ihnen zugeordneten Kriterien in Abhängigkeit von einem jeweils vorhandenen Szenario ausgewählt werden, so daß die Strategie bei dem Betreiben des Funksystems vorteilhaft auf die jeweilige Situation abgestellt werden kann. In diesem Zusammenhang ist es vorteilhaft, wenn nach Anspruch 6 die Kenngrößen mit Gewichten versehen und miteinander verrechnet werden, um die Prioritätswerte zu erhalten. Damit wird erreicht, daß beispielsweise nicht immer die kleinsten Trägerfrequenzen für die Teilnehmergruppe mit der größten Entfernung der Mobilstationen von der Feststation vergeben werden, wie es bei der besonders einfachen Ausführungsform von Anspruch 2 der Fall war, sondern es soll abhängig von den Kenngrößen die "beste" Trägerfrequenz für die jeweilige Funkverbindung vergeben werden. Weiterhin wird erreicht, daß beispielsweise nicht immer die kleinsten Trägerfrequenzen für die Teilnehmergruppe mit der größten Geschwindigkeit vergeben werden, sondern es soll abhängig von den Kenngrößen die "beste" Trägerfrequenz für die jeweilige Funkverbindung vergeben werden.

Eine vorteilhafte Ausgestaltung einer Einrichtung zur Durchführung des Verfahrens nach Anspruch 1 ist in Anspruch 15 gekennzeichnet. Diese Einrichtung stellt eine effiziente Lösung für die Durchführung des Verfahrens dar, wobei teilweise auf bereits vorhandene Komponenten des Funksystems zurückgegriffen werden kann, um das Konzept zu verwirklichen.

Weitere vorteilhafte Ausgestaltungen der Erfindung ergeben sich aus den restlichen Unteransprüchen.
Ausführungsbeispiele der Erfindung werden anhand der beiliegenden Zeichnungen beschrieben.
Es zeigen:

Figur 1    eine schematische Darstellung eines Ausführungsbeispieles des erfindungsgemäßen Funksystems; und

Figur 2    ein Szenario zur Erläuterung eines Beispiels des erfindungsgemäßen Verfahrens.

Bei dem Verfahren zum Betrieb von Funksystemen, in denen dem Funknetzbetreiber mehrere Frequenzbänder zur Verfügung stehen, werden zunächst eine oder mehrere Kenngrößen der Funkübertragung gemessen. Sodann wird festgestellt, bis zu welchem Erfüllungsgrad die gemessenen Kenngrößen oder Kombinationen davon ihnen zugeordnete Kriterien erfüllen, wobei die Kriterien in Abhängigkeit von einem jeweils vorhandenen Szenario ausgewählt werden. Die gemessenen Kenngrößen können also einzeln mit ihnen zugeordneten Kriterien verknüpft werden oder es können auch mehrere Kenngrößen mit Hilfe einer Rechenvorschrift kombiniert und dann einem gemeinsamen Kriterium unterworfen werden. Durch Zugrundelegung der Erfüllungsgrade der Kriterien wird dann durch eine geeignete Rechenvorschrift ein Prioritätswert für die betreffende Übertragungsverbindung berechnet. Schießlich wird die Übertragungsverbindung mit dem betreffenden Prioritätswert bei der Handover-Prozedur beziehungsweise bei der Festlegung der Frequenzzuordnung beziehungsweise bei der Herstellung der Funkverbindung berücksichtigt, um das für die Signalübertragung zu verwendende Frequenzband festzulegen.
Das zu verwendende Frequenzband kann zu Beginn der Verbindung festgelegt und dann nicht mehr geändert werden oder es kann zu Beginn der Verbindung festgelegt und nur dann geändert werden, wenn ein Wechsel zu einer anderen Feststation erfolgt, oder es kann zu Beginn der Verbindung festgelegt und jederzeit während der Verbindung geändert werden, wenn bei der Auswertung der Prioritätswerte ein Handover angezeigt ist.

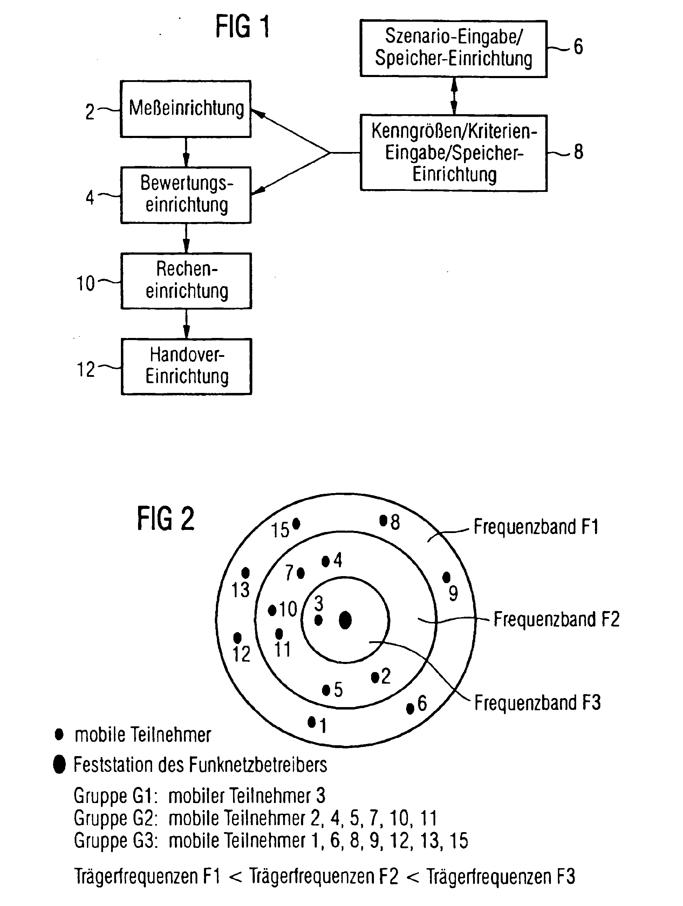

Figur 1 zeigt schematisch eine Einrichtung zum Betrieb von Funksystemen, wobei nur solche Einrichtungen gezeigt sind, die sich auf die Durchführung des erfindungsgemäßen Verfahrens beziehen, während andere Komponenten, die standardmäßig in derartigen Funksystemen vorhanden sind, nicht dargestellt sind. In einer Messeinrichtung 2 werden eine oder mehrere Kenngrößen der Funkübertragung gemessen, wobei die Art der Kenngrößen und deren Messung noch beschrieben wird. Die Kenngrößen werden in eine Bewertungseinrichtung 4 übergeben, mit der festgestellt wird, bis zu welchem Erfüllungsgrad die gemessenen Kenngrößen oder Kombinationen davon ihnen zugeordnete Kriterien erfüllen.

Die Information über die zu messenden Kenngrößen und die zugeordneten Kriterien sind in einer Kenngrößen/Kriterien-Eingabe/Speicher-Einrichtung 6 abgelegt. Die entsprechenden Informationen über die zu erwartenden Szenarien sind in einer Szenario-Eingabe/Speicher-Einrichtung 8 abgelegt. Auf diese Weise können neue Szenarien in der Szenario-Eingabe/Speicher-Einrichtung 8 abgelegt werden und die zugehörigen Informationen über die Kenngrößen und Kriterien in der Kenngrößen/Kriterien-Eingabe/Speicher-Einrichtung 6. Die Kenngrößen/Kriterien-Eingabe/Speicher-Einrichtung 6 gibt die entsprechenden Informationen an die Messeinrichtung 2 beziehungsweise die Bewertungseinrichtung 4 ab, um die Kriterien für die Kenngrößen in Abhängigkeit von einem jeweils vorhandenen Szenario auszuwählen. Die bewerteten Kenngrößen werden einer Recheneinrichtung 10 übergeben, in der durch Zugrundelegung der Erfüllungsgrade der Kriterien ein Prioritätswert für die betreffende Übertragungsverbindung berechnet wird. Die Prioritätswerte gelangen zu einer Handover-Einrichtung 12, die die Übertragungsverbindung mit dem betreffenden Prioritätswert bei der Handover-Prozedur beziehungsweise bei der Festlegung der Frequenzzuordnung beziehungsweise bei der Herstellung der Funkverbindung berücksichtigt, um das für die Signalübertragung zu verwendende Frequenzband festzulegen.
Die Meßeinrichtung 2 für die Kenngrößen umfaßt eine Einrichtung zur Messung der mittleren/momentanen Sendeleistung, und/oder eine Einrichtung zur Messung der mittleren/momentanen Empfangsleistung der eigenen und/oder anderer Verbindungen, und/oder eine Einrichtung zur Messung des mittleren/momentanen Signal-Stör-Abstands der eigenen und/oder anderer Verbindungen, und/oder eine Einrichtung zur Messung der mittleren/momentanen Bitfehlerrate der eigenen und/oder anderer Verbindungen, und/oder eine Einrichtung zur Messung der mittleren/momentanen Dämpfung der eigenen und/oder anderer Verbindungen, und/oder eine Einrichtung zur Bestimmung der Dienstart und -anforderungen, und/oder

-    eine Einrichtung zur Messung der maximalen Dopplerfrequenz, und/oder eine Einrichtung zur Messung des Dopplerspektrums, und/oder eine Einrichtung zur Messung der Geschwindigkeit zwischen der Mobilstation und/oder einer oder mehreren Feststationen, und/oder eine Einrichtung zur Messung der mittleren/momentanen Entfernung zwischen der Mobilstation und/oder einer oder mehreren Feststationen, wobei aus der Entfernungsmessung auch auf die Geschwindigkeit zurückgeschlossen werden kann und/oder eine Einrichtung zur Messung der momentanen Belegung der verschiedenen Frequenzbänder.

Die vorgenannten Einrichtungen zur Messung der Kenngrößen können sowohl in Aufwärts- als auch in Abwärtsrichtung auf der Verbindung in dem für die Verbindung verwendeten Frequenzband zwischen der Mobilstation und der Feststation, zu der die Mobilstation zugeteilt ist, und/oder der Verbindung in nicht für die Verbindung verwendeten Frequenzbändern zwischen Mobilstation und Feststation, zu der die Mobilstation zugeteilt ist, oder der Verbindung in einigen oder allen Frequenzbändern zwischen Mobilstation und Feststation, zu der die Mobilstation nicht zugeteilt ist, vorgesehen sein.

Es ist vorgesehen, daß die Einrichtungen zur Messung der Kenngrößen für jedes Frequenzband und jede Feststation Referenzsignale aussenden, die von der Mobilstation empfangen werden, wobei aus den empfangenen Referenzsignalen die Kenngrößen bestimmt werden. Dabei können die Einrichtungen zur Messung der Kenngrößen Trainingssequenzen oder Pilot-Signale oder datentragende Teile der Signale ausnutzen.

Die Entscheidung, ob ein Wechsel des Frequenzbandes erfolgen soll, kann zentral oder dezentral getroffen werden, wobei jedoch die zentrale Entscheidung bevorzugt wird. Zu diesem Zweck ist dann eine zentrale Einrichtung in der Feststation für diese Entscheidung vorgesehen.

Im folgenden werden zwei Beispiele beschrieben, wie ein Funknetzbetreiber, dem mehrere Frequenzbänder in unterschiedlichen Frequenzlagen zur Verfügung stehen, sein Funksystem gemäß der Erfindung konfigurieren muß, um eine maximale Reichweite rmax zu erreichen beziehungsweise um möglichst große Funkzellen zu realisieren und/oder die Übertragungsqualität zu verbessern. Dazu werden in den mobilen Endgeräten und in den Feststationen Messungen, beispielsweise die Bitfehlerrate, die Dämpfung, der Signal-Stör-Abstand, die Entfernung zur Feststation, die Empfangsleistung, die Auslastung der verschiedenen Frequenzbänder, die Sendeleistung im Vergleich zu maximaler Sendeleistung, durchgeführt. Die Messungen können auf unterschiedlichen Trägerfrequenzen und in verschiedenen Frequenzbändern durchgeführt werden.

Beispiel 1:

Das Verfahren in diesem Beispiel geht davon aus, daß die Dämpfung immer mit zunehmender Trägerfrequenz zunimmt. Weiterhin ist vorausgesetzt, daß nur Dienste mit gleicher Bitrate und Qualitätsanforderung aktiv sind.

Es stehen N Frequenzbänder F1, . . ., FN zur Verfügung. Die Trägerfrequenzen im Frequenzband Fn seien ohne Beschränkung der Allgemeinheit kleiner als die Trägerfrequenzen im Frequenzband Fn+1, n=1, . . ., N-1. Um eine maximale Reichweite rmax beziehungsweise möglichst große Funkzellen zu realisieren und/oder die Qualität zu verbessern, wird wie folgt verfahren:

Die Teilnehmer einer zu versorgenden Zelle werden in N Gruppen G1, . . ., GN eingeteilt. Die Zuordnung ist so, daß die erste Gruppe G1 diejenigen Teilnehmer enthält, die am weitesten von der Feststation entfernt sind. Die Gruppen G2, . . ., GN enthalten solche Teilnehmer, die mit zunehmender Gruppennummer eine kleinere Entfernung zur Feststation haben. Die Entfernung der Teilnehmer zur Feststation in der Gruppe Gn ist also kleiner als die Entfernung zur Feststation in der Gruppe Gn+1 mit n=1, ..., N-1. Die Gruppe GN enthält demnach diejenigen Teilnehmer, die die kürzeste Entfernung zur Feststation haben. Die Teilnehmer der Gruppe Gn benutzen zur Übertragung Trägerfrequenzen des Frequenzbands Fn, n=1...N.

Werden die Teilnehmer in die Gruppen G1-GN aufgeteilt und den Frequenzbändern F1 - FN zugeteilt, wird die maximale Reichweite rmax beziehungsweise die Größe der Funkzelle durch die Trägerfrequenzen des Frequenzbands F1 bestimmt. Da die Trägerfrequenzen des Frequenzbands F1 kleiner sind als die Trägerfrequenzen der Bänder F2-FN, ergibt sich eine größere maximale Reichweite rmax beziehungsweise können größere Funkzellen realisiert werden als im Falle, daß den Teilnehmern der Gruppe G1 Trägerfrequenzen der Bänder F2-FN zugeteilt werden.

Dieses Ausführungsbeispiel mit drei Frequenzgruppen F1, F2 und F3 ist in Figur 2 dargestellt, wobei insgesamt 15 Teilnehmer vorhanden sind, die in drei Gruppen G1 bis G2 gruppiert sind, derart, daß die Trägerfrequenzen F1 kleiner sind als die Trägerfrequenzen F2 und diese wiederum kleiner als die Trägerfrequenzen F3.

Beispiel 2:

Das Verfahren in diesem Beispiel geht davon aus, daß die Dämpfung immer mit zunehmender Trägerfrequenz zunimmt. Weiterhin ist vorausgesetzt, daß Dienste mit verschiedener Bitrate und/oder Qualitätsanforderung aktiv sind.

Es stehen N Frequenzbänder F1, ..., FN zur Verfügung. Die Trägerfrequenzen im Frequenzband Fn seien ohne Beschränkung der Allgemeinheit kleiner als die Trägerfrequenzen im Frequenzband Fn+1, n=1, . . ., N-1. Um eine maximale Reichweite rmax beziehungsweise möglichst große Funkzellen zu realisieren und/oder die Qualität zu verbessern, wird wie folgt verfahren:

Die Teilnehmer einer zu versorgenden Zelle werden in N Gruppen G1, . . ., GN eingeteilt. Die Zuordnung ist so, daß die erste Gruppe G1 Teilnehmer enthält, deren Kenngröße x am größten ist, wobei die Kenngröße x mit steigender Entfernung des Teilnehmers von der Feststation, mit steigender Qualitätsanforderung des Dienstes und mit steigender Bitrate des Dienstes zunimmt.

Die Gruppen G2, . . ., GN enthalten solche Teilnehmer, die mit zunehmender Gruppennummer eine kleinere Kenngröße x haben. Die Gruppe GN also enthält diejenigen Teilnehmer, die die kleinste Kenngröße x haben. Die Gruppe Gn benutzt zur Übertragung Trägerfrequenzen des Frequenzbands Fn, n=1,..., N. Werden die Teilnehmer in die Gruppen G1-GN aufgeteilt und den Frequenzbändern F1 - FN zugeteilt, wird die maximale Reichweite rmax erreicht.

Bisher wurde angenommen, daß immer mit zunehmender Trägerfrequenz die Dämpfung zunimmt beziehungsweise die dem Nachrichtendetektor zur Verfügung stehende Empfangsleistung sinkt. In einem realen Mobilfunksystem kann auch der Fall auftreten, daß die Dämpfung bei einer größeren Trägerfrequenz kleiner ist als bei einer niedrigen Trägerfrequenz. Deshalb kann die Entscheidung, in welche der Frequenzbänder F1 bis FN ein Teilnehmer eingeordnet wird, von anderen Kenngrößen als der Entfernung abhängig gemacht werden.

Im folgenden wird beschrieben, wie ein Funknetzbetreiber, dem mehrere Frequenzbänder in unterschiedlichen Frequenzlagen zur Verfügung stehen, sein Funksystem konfigurieren muß, um auf möglichst optimale Weise die jeweils erforderliche Übertragungsqualität für verschiedene Verbindungen bei hoher Relativgeschwindigkeit zwischen Feststation und Mobilstation sicherzustellen. Dazu ist erforderlich, daß in den mobilen Endgeräten und in den Feststationen Messungen, beispielsweise der maximalen Dopplerfrequenz, des Dopplerspektrums, der Geschwindigkeit, der Entfernung zur Feststation, der Bitfehlerrate, des Signal-Stör-Abstand, der Empfangsleistung, der Auslastung der verschiedenen Frequenzbänder, der Sendeleistung im Vergleich zu maximaler Sendeleistung, durchgeführt werden. Die Messungen können auf unterschiedlichen Trägerfrequenzen und in verschiedenen Frequenzbändern durchgeführt werden.

Beispiel 3:

Das Verfahren in diesem Beispiel geht davon aus, daß die Geschwindigkeitsabhängigkeit immer mit zunehmender Trägerfrequenz zunimmt. Weiterhin ist vorausgesetzt, daß nur Dienste mit gleicher Bitrate und Qualitätsanforderung aktiv sind.

Es stehen N Frequenzbänder F1, . . ., FN zur Verfügung. Die Trägerfrequenzen im Frequenzband Fn seien ohne Beschränkung der Allgemeinheit kleiner als die Trägerfrequenzen im Frequenzband Fn+1, n=1, . . ., N-1. Um eine geschwindigkeitsabhängige Frequenzbandzuteilung zur Verbesserung der Qualität zu erreichen, wird wie folgt verfahren:

Die Teilnehmer einer zu versorgenden Zelle werden in N Gruppen G1, ..., GN eingeteilt. Die Zuordnung ist so, daß die erste Gruppe G1 diejenigen Teilnehmer enthält, die die höchste Geschwindigkeit haben. Die Gruppen G2, ..., GN enthalten solche Teilnehmer, die mit zunehmender Gruppennummer eine geringere Geschwindigkeit haben. Die Geschwindigkeit der Teilnehmer in der Gruppe Gn ist also größer als die Geschwindigkeit der Gruppe Gn+1 mit n=1, ..., N-1. Die Gruppe GN enthält demnach diejenigen Teilnehmer, die die geringste Geschwindigkeit haben. Die Teilnehmer der Gruppe Gn benutzen zur Übertragung Trägerfrequenzen des Frequenzbands Fn, wobei n=1,..., N ist.

Werden die Teilnehmer wie oben beschrieben in die Gruppen G1 bis GN aufgeteilt und den Frequenzbändern F1 bis FN zugeteilt, wird die Stärke der Geschwindigkeitsabhängigkeit durch die Trägerfrequenzen des Frequenzbands F1 bestimmt. Da die Trägerfrequenzen des Frequenzbands F1 kleiner sind als die Trägerfrequenzen der Bänder F2 bis FN, ergibt sich eine geringere Geschwindigkeitsabhängigkeit und damit höhere Geschwindigkeitsunempfindlichkeit als im Falle, daß den Teilnehmern der Gruppe G1 Trägerfrequenzen der Bänder F2 bis FN zugeteilt werden.

In einem Szenario mit Makro- und Mikrozellen ist eine Folge der erfindungsgemäßen Frequenzbandzuteilung, daß in Makrozellen vorwiegend oder ausschließlich Trägerfrequenzen der Frequenzbänder F1 ...FM und in Mikrozellen vorwiegend oder ausschließlich Trägerfrequenzen der Frequenzbänder F(M+1) ... FN mit $1 \leq M < N$ zugeteilt werden. In den Makrozellen werden vorwiegend sich schnell bewegende Teilnehmer versorgt, um die Häufigkeit eines Handovers zu einer anderen Zelle gering zu halten, und in den Mikrozellen werden vorwiegend sich langsam bewegende Teilnehmer versorgt. Dies läßt sich in analoger Weise auf ein Szenario mit Makro-, Mikro- und Pikozellen erweitern.

Für die Häufigkeit, mit der das zu verwendende Frequenzband festgelegt beziehungsweise geändert wird, gibt es mehrere Möglichkeiten. Das zu verwendende Frequenzband wird zu Beginn der Verbindung festgelegt und dann nicht mehr geändert. Alternativ wird das zu verwendende Frequenzband zu Beginn der Verbindung festgelegt und nur dann verändert, wenn ein Wechsel zu einer anderen Feststation erfolgt, oder das zu verwendende Frequenzband wird zu Beginn der Verbindung festgelegt und kann jederzeit während der Verbindung geändert werden.

Szenario:

Das erfindungsgemäße Verfahren beziehungsweise dessen vorteilhafte Ausgestaltungen können in verschiedenen Szenarien umgesetzt werden. Diesen Szenarien kann bei der Auswahl der Kenngrößen Rechnung getragen werden. So können beispielsweise einer oder mehrere Feststationsstandorte vorhanden sein, an denen jeweils alle Frequenzbänder verfügbar sind. Es können auch einer oder mehrere Feststationsstandorte vorhanden sein, an denen jeweils nur ein Frequenzband verfügbar ist oder ein Teil der Frequenzbänder verfügbar ist. Ein weiteres Szenario besteht darin, daß alle Feststationsstandorte auf allen Frequenzbändern die gleiche Art der Übertragung verwenden (beispielsweise reines GSM-System, reines IS-95-System, reines UMTS-System).

Es ist auch möglich, daß nicht alle Feststationsstandorte und/oder nicht alle Frequenzbänder und Trägerfrequenzen die gleiche Art der Übertragung verwenden. Beispielsweise wird in manchen Frequenzbändern oder Trägerfrequenzen GSM verwendet, in anderen UMTS. Hierzu sind zur Anwendung der Erfindung Dual-Mode beziehungsweise Multi-Mode Terminals erforderlich, und für den Fall eines Wechsels des Frequenzbands während einer Verbindung zwischen verschiedenen Arten der Übertragung muß eine Handover-Prozedur zwischen beispielsweise GSM und UMTS möglich sein.

Weitere Möglichkeiten für Szenarien bestehen darin, daß in jedem Frequenzband alle Dienste angeboten werden, daß alternativ nicht in allen Frequenzbändern alle Dienste angeboten werden. Auch kann die Übertragung im FDD-Modus (frequenzy division duplex) oder im TDD-Modus (time division duplex) erfolgen.

Schließlich können die Frequenzbänder benachbart sein, das heißt, die Frequenzbänder, die zur Verwendung kommen, liegen nebeneinander in beispielsweise dem Frequenzband um 900 MHz oder in dem Frequenzband um 2 GHz, wobei die vorteilhafte Wirkung der Erfindung dann besser ist, wenn die Frequenzbänder nicht benachbart sind, das heißt, wenn von einem Frequenzband in dem Bandbereich um 900 MHz zu einem Frequenzband in dem Frequenzbereich um 2 GHz übergegangen wird.

Zur Festlegung, ob das Kriterium erfüllt ist, werden Messungen sowohl in der Aufwärts- als auch in der Abwärtsstrecke, auf der Verbindung in dem für die Verbindung verwendeten Frequenzband zwischen Mobilstation und Feststation, zu der die Mobilstation zugeteilt ist, und/oder auf der Verbindung in den nicht für die Verbindung verwendeten Frequenzbändern zwischen Mobilstation und Feststation, zu der die Mobilstation zugeteilt ist, und/oder auf der Verbindung in einigen oder allen Frequenzbändern zwischen Mobilstation und Feststation, zu der die Mobilstation nicht zugeteilt ist, durchgeführt.

Zur Festlegung, ob das Kriterium erfüllt ist, können die folgenden Kenngrößen oder Kombinationen dieser Kenngrößen einbezogen werden, wobei diese Kenngrößen für die Aufwärts- und/oder die Abwärtsstrecke bestimmt werden können:

Die mittlere/ momentane Sendeleistung, wobei das Kriterium beispielsweise um so mehr erfüllt ist, je näher die aktuelle Sendeleistung an der maximalen Sendeleistung ist.

Die mittlere/ momentane Empfangsleistung der eigenen Verbindung, wobei das Kriterium beispielsweise um so mehr erfüllt ist, je geringer die Empfangsleistung der eigenen Verbindung ist.

Die mittlere/ momentane Empfangsleistung anderer Verbindungen, wobei das Kriterium beispielsweise um so mehr erfüllt ist, je höher die Empfangsleistung in einem anderen Frequenzband der eigenen Feststation ist, wobei gleichzeitig die Empfangsleistung bei den anderen Frequenzbändern der anderen Feststation geringer ist. Das Frequenzband wird also innerhalb einer Zelle gewechselt, wenn die Verbindung zu einem anderen Frequenzband in der Zelle besser ist, die Verbindung zu den anderen Zellen aber schlechter ist.

Der mittlere/momentane Signal-Stör-Abstand der eigenen Verbindung, wobei das Kriterium um so mehr erfüllt ist, je geringer der Signal-Stör-Abstand der eigenen Verbindung ist.

Der mittlere/momentane Signal-Stör-Abstand anderer Verbindungen, wobei das Kriterium um so mehr erfüllt ist, je höher das Signal-Stör-Verhältnis in einem anderen Frequenzband der eigenen Feststation ist, wobei gleichzeitig der Signal-Stör-Abstand bei anderen Frequenzbändern der anderen Feststationen geringer ist.

Die mittlere/momentane Bitfehlerrate der eigenen Verbindung, wobei das Kriterium um so mehr erfüllt ist, je höher die Bitfehlerrate der eigenen Verbindung ist.

Die mittlere/momentane Bitfehlerrate anderer Verbindungen, wobei das Kriterium um so mehr erfüllt ist, je geringer die Bitfehlerrate in einem anderen Frequenzband der eigenen Feststation ist, wobei gleichzeitig die Bitfehlerrate bei anderen Frequenzbändern der anderen Feststation höher ist. Das Frequenzband wird also innerhalb einer Zelle gewechselt, wenn die Verbindung zu einem anderen Frequenzband in der Zelle besser ist, die Verbindung zu den anderen Zellen aber schlechter ist.

Die mittlere/momentane Dämpfung der eigenen Verbindung, wobei das Kriterium um so mehr erfüllt ist, je höher die Dämpfung ist.

Die mittlere/momentane Dämpfung anderer Verbindungen, wobei das Kriterium um so mehr erfüllt ist, je geringer die Dämpfung in einem anderen Frequenzband der eigenen Feststation ist, wobei gleichzeitig die Dämpfung bei den anderen Frequenzbändern der anderen Feststationen höher ist.

Die Dienstart und -anforderungen, wobei das Kriterium um so mehr erfüllt ist, je höher die Anforderungen bezüglich der Bitfehlerrate an den jeweiligen Dienst und je höher die Bitrate ist.

Die maximale Dopplerfrequenz, wobei das Kriterium beispielsweise um so mehr erfüllt ist, je höher die maximale Dopplerfrequenz ist, die bei der Verbindung auftritt.

Das Dopplerspektrum, wobei das Kriterium beispielsweise um so mehr erfüllt ist, je größer eine Kenngröße ist, die die Breite des Dopplerspektrums charakterisiert.

Die Geschwindigkeit zwischen der Mobilstation und einer oder mehreren Feststationen, wobei das Kriterium beispielsweise um so mehr erfüllt ist, je höher die Geschwindigkeit der Mobilstation ist.

Die mittlere/momentane Entfernung zwischen der Mobilstation und einer oder mehreren Feststationen, was beispielsweise durch einen zusätzlichen GPS (Global Positioning System) Empfänger gemessen werden kann, wobei aus der Entfernungsmessung auf die Geschwindigkeit zurückgeschlossen werden kann. Das Kriterium ist beispielsweise um so mehr erfüllt, je größer die Geschwindigkeit ist.

Die Bitfehlerstatistik, wobei das Kriterium um so mehr erfüllt ist, je stärker die Bitfehler bei einer Burstübertragung zum Burstrand hin zunehmen.

Die momentane Belegung der verschiedenen Frequenzbänder, wobei das Kriterium um so mehr erfüllt ist, je geringer die Belegung des Frequenzbandes ist, zu dem eine Handover-Prozedur durchgeführt werden soll und je höher die Belegung des Frequenzbandes ist, das derzeit verwendet wird.

Die Kenngrößen können mit Gewichten versehen und miteinander verrechnet werden, um die Prioritätswerte zu erhalten. Die genannten Kriterien können auch durch Gewichtung in primäre, sekundäre oder geringerwertige Kriterien eingestuft werden.

Die Kenngrößen können dadurch gemessen werden, daß für jedes Frequenzband und jede Feststation Referenzsignale ausgesendet werden (ähnlich dem Broadcast Control Channel BCCH in GSM oder dem Pilot-Kanal in IS-95), die von der Mobilstation empfangen werden, wobei aus den empfangenen Referenzsignalen die obigen Kenngrößen bestimmt werden. Einige der Kenngrößen können aus Trainingssequenzen bestimmt werden, die zum Zweck der Kanalschätzung in die ausgesendeten Signale eingebettet sind. Einige der Kenngrößen können aus den Pilot-Signalen oder den datentragenden Teilen der Signale bestimmt werden. Alle für Interzell- und Interazell-Handover angewendeten Kriterien können in analoger Weise angewendet werden zur Entscheidung, ob letztlich ein Wechsel auf ein anderes Frequenzband erfolgt.

Die Entscheidung, ob ein Wechsel des Frequenzbands erfolgen soll, kann dezentral oder zentral beispielsweise in der Feststation erfolgen, wobei im letzten Fall das Wissen über die Verbindungen mehrerer Mobilstationen zu Feststationen benutzt werden kann.

Im übrigen muß die "Feststation" nicht wirklich ortsfest und die "Mobilstation" nicht wirklich mobil sein. Der Begriff "Feststation" ist so zu verstehen, daß damit die im heutigen GSM vorhandenen Stationen beispielsweise BTS-Stationen (base transceive station), BSC-Stationen (base switching center), MSC-Stationen (mobile switching center) und dergleichen, und im UMTS entsprechende Stationen gemeint sind.

## Patentansprüche

1. Verfahren zum Betrieb von Funksystemen, in denen dem Funknetzbetreiber mehrere Frequenzbänder zur Verfügung stehen, bei dem

   - eine oder mehrere Kenngrößen der Funkübertragung gemessen werden,
   - festgestellt wird, bis zu welchem Erfüllungsgrad die gemessenen Kenngrößen oder Kombinationen davon ihnen zugeordnete Kriterien erfüllen, wobei die Kriterien in Abhängigkeit von einem jeweils vorhandenen Szenario ausgewählt werden,
   - durch Zugrundelegung der Erfüllungsgrade der Kriterien ein Prioritätswert für die betreffende Übertragungsverbindung berechnet wird, und
   - die Übertragungsverbindung mit dem betreffenden Prioritätswert bei der Handover-Prozedur beziehungsweise bei der Festlegung der Frequenzzuordnung beziehungsweise bei der Herstellung der Funkverbindung berücksichtigt wird, um das für die Signalübertragung zu verwendende Frequenzband festzulegen.

2. Verfahren nach Anspruch 1, wobei in dem System N Frequenzbänder F1, ..., FN zur Verfügung stehen, für deren Trägerfrequenzen gilt, daß die Trägerfrequenzen im Frequenzband Fn kleiner als die Trägerfrequenzen im Frequenzband Fn+1, n=1, ..., N-1 sind, bei dem

   - die Teilnehmer einer zu versorgenden Zelle in N-Gruppen G1, ..., GN eingeteilt werden, wobei die erste Gruppe G1 diejenigen Teilnehmer enthält, die am weitesten von der Feststation entfernt sind, und die Gruppe GN diejenigen Teilnehmer enthält, die die kürzeste Entfernung zur Feststation haben, und die Entfernung der Teilnehmer zur Feststation in der Gruppe Gn kleiner ist als die Entfernung zur Feststation in der Gruppe Gn+1 mit n=1, ..., N-1, und
   - die Teilnehmer der Gruppe Gn zur Übertragung Trägerfrequenzen des Frequenzbandes Fn mit n=1,..., N benutzen.

3. Verfahren nach Anspruch 1, wobei in dem System N Frequenzbänder F1, ..., FN zur Verfügung stehen, für deren Trägerfrequenzen gilt, daß die Trägerfrequenzen im Frequenzband Fn kleiner als die Trägerfrequenzen im Frequenzband Fn+1, n=1, ..., N-1 sind, bei dem

   - die Teilnehmer einer zu versorgenden Zelle in N-Gruppen G1, ..., GN eingeteilt werden,
   - die erste Gruppe G1 Teilnehmer enthält, deren Kenngröße am größten ist, wobei die Kenngröße mit steigender Entfernung des Teilnehmers von der Feststation, mit steigender Qualitätsanforderung des Dienstes und mit steigender Bitrate des Dienstes zunimmt,
   - die Gruppen G2, ..., GN Teilnehmer enthalten, die mit zunehmender Gruppennummer eine kleinere Kenngröße haben, und
   - die Gruppe Gn zur Übertragung Trägerfrequenzen des Bandes Fn mit n=1, ..., N benutzt.

4. Verfahren nach Anspruch 1, wobei in dem System N Frequenzbänder F1, ..., FN zur Verfügung stehen, für deren Trägerfrequenzen gilt, daß die Trägerfrequenzen im Frequenzband Fn kleiner als die Trägerfrequenzen im Frequenzband Fn+1 mit n=1, ..., N-1 sind,

- die Teilnehmer einer zu versorgenden Zelle in N-Gruppen G1, ..., GN eingeteilt werden, wobei die erste Gruppe G1 diejenigen Teilnehmer enthält, die die größte Geschwindigkeit haben, und die Gruppe GN diejenigen Teilnehmer enthält, die die geringste Geschwindigkeit haben, und die Geschwindigkeit der Teilnehmer in der Gruppe Gn größer ist als die Geschwindigkeit der Gruppe Gn+1 mit n=1, ..., N-1, und
- die Teilnehmer der Gruppe Gn zur Übertragung Trägerfrequenzen des Frequenzbandes Fn mit n=1,..., N benutzen.

5. Verfahren nach einem der vorhergehenden Ansprüche, bei dem die Kenngrößen und die ihnen zugeordneten Kriterien umfassen:

- die mittlere/momentane Sendeleistung, wobei das Kriterium um so mehr erfüllt ist, je näher die aktuelle Sendeleistung an der Maximalsendeleistung ist, und/oder
- die mittlere/momentane Empfangsleistung der eigenen Verbindung, wobei das Kriterium um so mehr erfüllt ist, je geringer die Empfangsleistung der eigenen Verbindung ist, und/oder
- die mittlere/momentane Empfangsleistung anderer Verbindungen, wobei das Kriterium um so mehr erfüllt ist, je höher die Empfangsleistung in einem anderen Frequenzband der eigenen Feststation ist, wobei gleichzeitig die Empfangsleistung bei den anderen Frequenzbändern der anderen Feststationen geringer ist, und/oder
- der mittlere/momentane Signal-Stör-Abstand der eigenen Verbindung, wobei das Kriterium um so mehr erfüllt ist, je geringer der Signal-Stör-Abstand der eigenen Verbindung ist, und/oder
- der mittlere/momentane Signal-Stör-Abstand anderer Verbindungen, wobei das Kriterium um so mehr erfüllt ist, je höher das Signal-Stör-Verhältnis in einem anderen Frequenzband der eigenen Feststation ist, wobei gleichzeitig der Signal-Stör-Abstand bei anderen Frequenzbändern der anderen Feststationen geringer ist, und/oder
- die mittlere/momentane Bitfehlerrate der eigenen Verbindung, wobei das Kriterium um so mehr erfüllt ist, je höher die Bitfehlerrate der eigenen Verbindung ist, und/oder
- die mittlere/momentane Bitfehlerrate anderer Verbindungen, wobei das Kriterium um so mehr erfüllt ist, je geringer die Bitfehlerrate in einem anderen Frequenzband der eigenen Feststation ist, wobei gleichzeitig die Bitfehlerrate bei anderen Frequenzbändern der anderen Feststation höher ist, und/oder
- die mittlere/momentane Dämpfung der eigenen Verbindung,

wobei das Kriterium um so mehr erfüllt ist, je höher die Dämpfung ist, und/oder

- die mittlere/momentane Dämpfung anderer Verbindungen,

wobei das Kriterium um so mehr erfüllt ist, je geringer die Dämpfung in einem anderen Frequenzband der eigenen Feststation ist, wobei gleichzeitig die Dämpfung bei den anderen Frequenzbändern der anderen Feststationen höher ist, und/oder

- die Dienstart und -anforderungen, wobei das Kriterium um so mehr erfüllt ist, je höher die Anforderungen bezüglich der Bitfehlerrate an den jeweiligen Dienst und je höher die Bitrate ist, und/oder
- die maximale Dopplerfrequenz, wobei das Kriterium beispielsweise um so mehr erfüllt ist, je höher die maximale Dopplerfrequenz ist, die bei der Verbindung auftritt, und/oder
- das Dopplerspektrum, wobei das Kriterium beispielsweise um so mehr erfüllt ist, je größer eine Kenngröße ist, die die Breite des Dopplerspektrums charakterisiert, und/oder
- die Geschwindigkeit zwischen der Mobilstation und einer oder mehreren Feststationen, wobei das Kriterium beispielsweise um so mehr erfüllt ist, je höher die Geschwindigkeit der Mobilstation ist, und/oder
- die mittlere/momentane Entfernung zwischen der Mobilstation und einer oder mehreren Feststationen, wobei aus der Entfernungsmessung auf die Geschwindigkeit zurückgeschlossen werden kann und das Kriterium beispielsweise um so mehr erfüllt ist, je größer die Geschwindigkeit ist und/oder
- Die Bitfehlerstatistik, wobei das Kriterium um so mehr erfüllt ist, je stärker die Bitfehler bei einer Burstübertragung zum Burstrand hin zunehmen, und/oder
- die momentane Belegung der verschiedenen Frequenzbänder, wobei das Kriterium um so mehr erfüllt ist, je geringer die Belegung des Frequenzbandes ist, zu dem eine Handover-Prozedur durchgeführt werden soll und je höher die Belegung des Frequenzbandes ist, das derzeit verwendet wird.

6. Verfahren nach Anspruch 1 oder 5, bei dem die Kenngrößen mit Gewichten versehen und miteinander verrechnet werden, um die Prioritätswerte zu erhalten.

7. Verfahren nach einem der vorhergehenden Ansprüche, bei dem die Messungen der Kenngrößen sowohl in Aufwärts- als

auch in Abwärtsrichtung auf

- der Verbindung in dem für die Verbindung verwendeten Frequenzband zwischen der Mobilstation und der Feststation, zu der die Mobilstation zugeteilt ist, und/oder
- der Verbindung in nicht für die Verbindung verwendeten Frequenzbändern zwischen Mobilstation und Feststation, zu der die Mobilstation zugeteilt ist, oder
- der Verbindung in einigen oder allen Frequenzbändern zwischen Mobilstation und Feststation, zu der die Mobilstation nicht zugeteilt ist, erfolgen.

8. Verfahren nach einem der vorhergehenden Ansprüche, bei dem die Kenngrößen **dadurch** gemessen werden, daß für jedes Frequenzband und jede Feststation Referenzsignale ausgesendet werden, die von der Mobilstation empfangen werden, wobei aus den empfangenen Referenzsignalen die Kenngrößen bestimmt werden.

9. Verfahren nach einem der vorhergehenden Ansprüche, bei dem die Messung der Kenngrößen über die Trainingssequenzen oder die Pilot-Signale oder die datentragenden Teile der Signale durchgeführt wird.

10. Verfahren nach Anspruch 1, bei dem die Entscheidung, ob ein Wechsel des Frequenzbandes erfolgen soll, zentral in der Feststation erfolgt.

11. Verfahren nach Anspruch 1, bei dem das zu verwendende Frequenzband zu Beginn der Verbindung festgelegt und dann nicht mehr geändert wird.

12. Verfahren nach Anspruch 1, bei dem das zu verwendende Frequenzband zu Beginn der Verbindung festgelegt und nur dann geändert wird, wenn ein Wechsel zu einer anderen Feststation erfolgt.

13. Verfahren nach Anspruch 1, bei dem das zu verwendende Frequenzband zu Beginn der Verbindung festgelegt und jederzeit während der Verbindung geändert wird, wenn bei der Auswertung der Prioritätswerte ein Handover angezeigt ist.

14. Verfahren nach einem der vorhergehenden Ansprüche, wobei in dem Szenarium wenigstens das GSM-System und das UMTS-System vorhanden sind, bei dem für den Fall eines Wechsel des Frequenzbandes während einer Verbindung zwischen verschiedenen Arten der Übertragung eine Handover-Prozedur zwischen GSM und UMTS vorhanden ist.

15. Einrichtung zum Betrieb von Funksystemen nach dem Verfahren nach Anspruch 1, mit

- einer Meßeinrichtung (2) für eine oder mehrere Kenngrößen der Funkübertragung,
- einer Bewertungseinrichtung (4), mit der festgestellt wird, bis zu welchem Erfüllungsgrad die gemessenen Kenngrößen oder Kombinationen davon ihnen zugeordnete Kriterien erfüllen, wobei die Kriterien in Abhängigkeit von einem jeweils vorhandenen Szenario ausgewählt werden, durch
- eine Recheneinrichtung (10), in der durch Zugrundelegung der Erfüllungsgrade der Kriterien ein Prioritätswert für die betreffende Übertragungsverbindung berechnet wird, und durch
- eine Einrichtung (12), die die Übertragungsverbindung mit dem betreffenden Prioritätswert bei der Handover-Prozedur beziehungsweise bei der Festlegung der Frequenzzuordnung beziehungsweise bei der Herstellung der Funkverbindung berücksichtigt, um das für die Signalübertragung zu verwendende Frequenzband festzulegen.

16. Einrichtung nach Anspruch 15, **dadurch gekennzeichnet, daß** die Meßeinrichtung für die Kenngrößen umfaßt:

- eine Einrichtung zur Messung der mittleren/momentanen Sendeleistung, und/oder
- eine Einrichtung zur Messung der mittleren/momentanen Empfangsleistung der eigenen und/oder anderer Verbindungen, und/oder
- eine Einrichtung zur Messung des mittleren/momentanen Signal-Stör-Abstands der eigenen und/oder anderer Verbindungen, und/oder
- eine Einrichtung zur Messung der mittleren/momentanen Bitfehlerrate der eigenen und/oder anderer Verbindungen, und/oder
- eine Einrichtung zur Messung der mittleren/momentanen Dämpfung der eigenen und/oder anderer Verbindungen, und/oder
- eine Einrichtung zur Bestimmung der Dienstart und - anforderungen, und/oder
- eine Einrichtung zur Messung der maximalen Dopplerfrequenz, und/oder
- eine Einrichtung zur Messung des Dopplerspektrums, und/oder
- eine Einrichtung zur Messung der Geschwindigkeit zwischen der Mobilstation und/oder einer oder mehreren Feststationen, und/oder
- eine Einrichtung zur Messung der mittleren/momentanen Entfernung zwischen der Mobilstation und/oder einer oder mehreren Feststationen, wobei aus der Entfernungsmessung auch auf die Geschwindigkeit zurückgeschlossen werden kann und/oder

- eine Einrichtung zur Messung der momentanen Belegung der verschiedenen Frequenzbänder.

**17.** Einrichtung nach Anspruch 15 oder 16, **dadurch gekennzeichnet, daß** die Einrichtungen zur Messung der Kenngrößen sowohl in Aufwärts- als auch in Abwärtsrichtung auf

- der Verbindung in dem für die Verbindung verwendeten Frequenzband zwischen der Mobilstation und der Feststation, zu der die Mobilstation zugeteilt ist, und/oder
- der Verbindung in nicht für die Verbindung verwendeten Frequenzbändern zwischen Mobilstation und Feststation, zu der die Mobilstation zugeteilt ist, oder
- der Verbindung in einigen oder allen Frequenzbändern zwischen Mobilstation und Feststation, zu der die Mobilstation nicht zugeteilt ist, vorgesehen sind.

**18.** Einrichtung nach einem der Ansprüche 15 bis 17, **dadurch gekennzeichnet, daß** die Einrichtungen zur Messung der Kenngrößen für jedes Frequenzband und jede Feststation Referenzsignale aussenden, die von der Mobilstation empfangen werden, wobei aus den empfangenen Referenzsignalen die Kenngrößen bestimmt werden.

**19.** Einrichtung nach einem der Ansprüche 15 bis 17, **dadurch gekennzeichnet, daß** die Einrichtungen zur Messung der Kenngrößen Trainingssequenzen oder Pilot-Signale oder datentragende Teile der Signale ausnutzen.

**20.** Einrichtung nach einem der Ansprüche 15 bis 19, **gekennzeichnet durch** eine zentrale Einrichtung in der Feststation für die Entscheidung, ob ein Wechsel des Frequenzbandes erfolgen soll.

**Claims**

**1.** Method for operating radio systems in which a plurality of frequency bands are available to the radio network operator, wherein

- one or more characteristic values of the radio transmission are measured,
- it is established up to what degree of fulfilment the measured characteristic values or combinations thereof satisfy the criteria assigned to them, the criteria being selected in accordance with a scenario existing in the particular case,
- a priority value for the relevant transmission connection is calculated using the degrees of fulfilment of the criteria as a basis, and

- the transmission connection with the relevant priority value is taken into account during the handover procedure or, as the case may be, during the specification of the frequency allocation or, as the case may be, during the establishment of the radio connection in order to specify the frequency band to be used for the signal transmission.

**2.** Method according to claim 1, with there being available in the system N frequency bands F1, ..., FN for whose carrier frequencies it holds that the carrier frequencies in the frequency band Fn are less than the carrier frequencies in the frequency band Fn+1, where n=1, ..., N-1, wherein

- the subscribers of a cell to be provided with radio coverage are divided into N groups G1, ..., GN, with the first group G1 containing those subscribers who are at the greatest distance from the fixed station, and group GN containing those subscribers who are at the shortest distance, and the distance of the subscribers in group Gn from the fixed station being less than the distance from the fixed station in group Gn+1, where n=1, ..., N-1, and
- the subscribers of group Gn use carrier frequencies of the frequency band Fn, where n=1,..., N, for the purpose of the transmission.

**3.** Method according to claim 1, with there being available in the system N frequency bands F1, ..., FN for whose carrier frequencies it holds that the carrier frequencies in the frequency band Fn are less than the carrier frequencies in the frequency band Fn+1, where n=1, ..., N-1, wherein

- the subscribers of a cell to be provided with radio coverage are divided into N groups G1, ..., GN,
- the first group G1 contains subscribers with the greatest characteristic value, the characteristic value increasing as the distance of the subscriber from the fixed station increases, as the quality requirement of the service increases and as the bit rate of the service increases,
- the groups G2, ..., GN contain subscribers that have a smaller characteristic value as the group number increases, and
- group Gn uses carrier frequencies of the band Fn, where n=1, ..., N, for the purpose of the transmission.

**4.** Method according to claim 1, with there being available in the system N frequency bands F1, ..., FN for whose carrier frequencies it holds that the carrier frequencies in the frequency band Fn are less than the carrier frequencies in the frequency band Fn+1, where n=1, ..., N-1,

- the subscribers of a cell to be provided with radio coverage are divided into N groups G1, ..., GN, with the first group G1 containing those subscribers who have the greatest speed, and group GN containing those subscribers who have the lowest speed, and the speed of the subscribers in group Gn being greater than the speed of group Gn+1, where n=1, ..., N-1, and
- the subscribers of group Gn use carrier frequencies of the frequency band Fn, where n=1,..., N, for the purpose of the transmission.

5. Method according to one of the preceding claims, wherein the characteristic values and the criteria assigned to them comprise:

- the average/current transmit power, with the criterion being all the more satisfied, the closer the current transmit power is to the maximum transmit power, and/or
- the average/current receive power of the home connection, with the criterion being all the more satisfied, the lower the receive power of the home connection, and/or
- the average/current receive power of other connections, with the criterion being all the more satisfied, the higher the receive power is in another frequency band of the home fixed station, with at the same time the receive power being lower in the other frequency bands of the other fixed stations, and/or
- the average/current signal-to-noise ratio of the home connection, with the criterion being all the more satisfied, the lower the signal-to-noise ratio of the home connection is, and/or
- the average/current signal-to-noise ratio of other connections, with the criterion being all the more satisfied, the higher the signal-to-noise ratio is in another frequency band of the home fixed station, with at the same time the signal-to-noise ratio being lower in other frequency bands of the other fixed stations, and/or
- the average/current bit error rate of the home connection, with the criterion being all the more satisfied, the higher the bit error rate of the home connection, and/or
- the average/current bit error rate of other connections, with the criterion being all the more satisfied, the lower the bit error rate in another frequency band of the home fixed station, with at the same time the bit error rate being higher in other frequency bands of the other fixed station, and/or
- the average/current attenuation of the home connection, with the criterion being all the more satisfied, the higher the attenuation, and/or

- the average/current attenuation of other connections, with the criterion being all the more satisfied, the lower the attenuation in another frequency band of the home fixed station, with at the same time the attenuation being higher in the other frequency bands of the other fixed stations, and/or
- the type of service and service requirements, with the criterion being all the more satisfied, the higher the bit error rate requirements placed on the particular service and the higher the bit rate, and/or
- the maximum Doppler frequency, with the criterion being all the more satisfied, for example, the higher the maximum Doppler frequency that occurs during the connection, and/or
- the Doppler spectrum, with the criterion being all the more satisfied, for example, the greater a characteristic value that characterises the width of the Doppler spectrum, and/or
- the speed between the mobile station and one or more fixed stations, with the criterion being all the more satisfied, for example, the higher the speed of the mobile station, and/or
- the average/current distance between the mobile station and one or more fixed stations, with it being possible to deduce the speed from the distance measurement and the criterion being all the more satisfied, for example, the greater the speed and/or
- the bit error statistics, with the criterion being all the more satisfied, the more the bit errors increase towards the burst edge during a burst-mode transmission, and/or
- the current usage of the different frequency bands, with the criterion being all the more satisfied, the lower the usage of the frequency band to which a handover procedure is to be performed and the higher the usage of the frequency band that is currently being used.

6. Method according to claim 1 or 5, wherein the characteristic values are provided with weights and set against one another in order to obtain the priority values.

7. Method according to one of the preceding claims, wherein the measurements of the characteristic values are carried out both in the uplink and in the downlink direction

- on the connection in the frequency band used for the connection between the mobile station and the fixed station to which the mobile station is assigned, and/or
- on the connection in frequency bands not used for the connection between mobile station and fixed station to which the mobile station is assigned, or
- on the connection in some or all of the frequency bands between mobile station and fixed station to which the mobile station is not assigned.

8. Method according to one of the preceding claims, wherein die characteristic values are measured through transmission of reference signals for each frequency band and each fixed station, which reference signals are received by the mobile station, with the characteristic values being determined from the received reference signals.

9. Method according to one of the preceding claims, wherein the measurement of the characteristic values is carried out via the training sequences or the pilot signals or the data-carrying parts of the signals.

10. Method according to claim 1, wherein
the decision whether a switch of frequency band is to take place is taken centrally in the fixed station.

11. Method according to claim 1, wherein
the frequency band to be used is specified at the beginning of the connection and then not changed again subsequently.

12. Method according to claim 1, wherein
the frequency band to be used is specified at the beginning of the connection and changed only if a switch to another fixed station takes place.

13. Method according to claim 1, wherein
the frequency band to be used is specified at the beginning of the connection and changed at any time during the connection if a handover is indicated during the evaluation of the priority values.

14. Method according to one of the preceding claims, with at least the GSM system and the UMTS system being present in the scenario, wherein
a handover procedure between GSM and UMTS is present for the eventuality of a change of frequency band during a connection between different types of transmission.

15. Device for operating radio systems in accordance with the method according to claim 1, comprising

- a measuring device (2) for one or more characteristic values of the radio transmission,
- an evaluation device (4) by means of which it is established up to what degree of fulfilment the measured characteristic values or combinations thereof satisfy criteria assigned to them, the criteria being selected in accordance with a scenario present in a particular case by means of
- a computing device (10) in which, by using the degrees of fulfilment of the criteria as a basis, a priority value is calculated for the relevant transmission connection, and by means of
- a device (12) which takes the transmission connection with the relevant priority value into account during the handover procedure or, as the case may be, during the specification of the frequency allocation or, as the case may be, during the establishment of the radio connection in order to specify the frequency band to be used for the signal transmission.

16. Device according to claim 15,
**characterised in that**
the measuring device for the characteristic values comprises:

- a device for measuring the average/current transmit power, and/or
- a device for measuring the average/current receive power of the home and/or of other connections, and/or
- a device for measuring the average/current signal-to-noise ratio of the home and/or of other connections, and/or
- a device for measuring the average/current bit error rate of the home and/or of other connections, and/or
- a device for measuring the average/current attenuation of the home and/or of other connections, and/or
- a device for determining the type of service and service requirements, and/or
- a device for measuring the maximum Doppler frequency, and/or
- a device for measuring the Doppler spectrum, and/or
- a device for measuring the speed between the mobile station and/or one or more fixed stations, and/or
- a device for measuring the average/current distance between the mobile station and/or one or more fixed stations, with it also being possible to deduce the speed from the distance measurement and/or
- a device for measuring the current usage of the different frequency bands.

17. Device according to claim 15 or 16,
**characterised in that** the devices for measuring the characteristic values are provided both in the uplink and in the downlink direction

- on the connection in the frequency band used for the connection between the mobile station and the fixed station to which the mobile station is assigned, and/or
- on the connection in frequency bands not used for the connection between mobile station and fixed station to which the mobile station is assigned, or
- on the connection in some or all of the frequency bands between mobile station and fixed station to which the mobile station is not assigned.

18. Device according to one of claims 15 to 17, **characterised in that**
the devices for measuring the characteristic values for each frequency band and each fixed station transmit reference signals which are received by the mobile station, the characteristic values being determined from the received reference signals.

19. Device according to one of claims 15 to 17, **characterised in that**
the devices for measuring the characteristic values make use of training sequences or pilot signals or data-carrying parts of the signals.

20. Device according to one of claims 15 to 19, **characterised by**
a central device in the fixed station for taking the decision whether a change of frequency band is to take place.

**Revendications**

1. Procédé d'exploitation de systèmes radio, dans lesquels plusieurs bandes de fréquences sont à la disposition de l'opérateur du réseau radio, dans lequel

- un ou plusieurs paramètres de la transmission radio sont mesurés,
- il est constaté jusqu'à quel degré d'accomplissement les paramètres ou combinaisons de ceux-ci mesurés remplissent les critères qui leur sont attribués, ces critères étant sélectionnés en fonction d'un scénario respectif existant,
- une valeur de priorité est calculée pour la liaison de transmission concernée en prenant pour base le degré d'accomplissement de ces critères, et
- la liaison de transmission est prise en compte avec la valeur de priorité concernée lors de la procédure de commutation respectivement lors de la définition de l'attribution de la fréquence respectivement lors de l'établissement de la liaison radio, pour définir la bande de fréquences à utiliser pour la transmission du signal.

2. Procédé selon la revendication 1, dans lequel sont disponibles dans le système N des bandes de fréquences F1, ..., FN pour les fréquences porteuses desquelles il est prévu que ces mêmes fréquences porteuses soient inférieures dans la bande de fréquences Fn aux fréquences porteuses dans la bande de fréquences Fn+1, n=1, ..., N-1, dans lequel

- les abonnés d'une cellule à alimenter sont répartis en N-groupes G1, ..., GN, dans lesquels le premier groupe G1 contient les abonnés les plus éloignés de la station fixe, et le groupe GN contient les abonnés les moins éloignés de la station fixe, et la distance des abonnés à la station fixe dans le groupe GN est inférieure à la distance de la station fixe dans le groupe Gn+1 avec n=1, ..., N-1, et
- dans lequel les abonnés du groupe Gn utilisent des fréquences porteuses de la bande de fréquences Fn avec n=1, ..., N pour la transmission.

3. Procédé selon la revendication 1, dans lequel sont disponibles dans le système N des bandes de fréquences F1, ..., FN pour les fréquences porteuses desquelles il est prévu que les fréquences porteuses dans la bande de fréquences Fn soient inférieures aux fréquences porteuses dans la bande de fréquences Fn+1, n=1, ..., N-1, dans lequel

- les abonnés d'une cellule à alimenter sont répartis en N-groupes G1, ..., GN,
- le premier groupe G1 contient des abonnés dont les paramètres sont les plus grands, le paramètre augmentant au fur et à mesure que l'abonné s'éloigne de la station fixe, que les exigences de qualité du service augmentent ainsi que le débit binaire du service,
- les groupes G2, ..., GN contiennent des abonnés, qui ont un paramètre plus petit au fur et à mesure que le numéro du groupe augmente et
- le groupe Gn utilise des fréquences proteuses de la bande Fn avec n=1, ..., N pour la transmission.

4. Procédé selon la revendication 1, dans lequel sont disponibles dans le système N des bandes de fréquences F1, ..., FN, pour les fréquences porteuses desquelles il est prévu que ces mêmes fréquences porteuses dans la bande de fréquences Fn soient inférieures aux fréquences porteuses dans la bande de fréquences Fn+1, n=1, ..., N-1,

- les abonnés d'une cellule à alimenter sont répartis en N-groupes G1, ..., GN, dont le premier groupe G1 contient les abonnés présentant la plus grande vitesse et le groupe GN contient les abonnés présentant la plus petite vitesse, et la vitesse des abonnés dans le groupe GN est supérieure à la vitesse du groupe Gn+1 avec n=1, ..., N-1, et
- dans lequel les abonnés du groupe Gn utilisent des fréquences porteuses de la bande de fréquences Fn avec n=1, ..., N pour la transmission.

**5.** Procédé selon l'une des revendications précédentes, dans lequel les paramètres et les critères qui leur sont attribués comprennent :

- la puissance émettrice moyenne/momentanée, le critère étant d'autant plus rempli que la puissance émettrice actuelle se rapproche de la puissance émettrice maximale et/ou
- la puissance réceptrice moyenne/momentanée de la propre liaison, le critère étant d'autant plus rempli que la puissance émettrice de la propre liaison est faible, et/ou
- la puissance réceptrice moyenne/momentanée d'autres liaisons, le critère étant d'autant plus rempli que la puissance réceptrice dans une autre bande de fréquences est plus élevée que celle de la propre station fixe, la puissance réceptrice étant simultanément plus faible pour les autres bandes de fréquences des autres stations fixes, et/ou
- le rapport signal-bruit moyen/momentané de la propre liaison, le critère étant d'autant plus rempli que le rapport signal-bruit de la propre liaison est faible, et/ou
- le rapport signal-bruit moyen/momentané d'autres liaisons, le critère étant d'autant plus rempli que le rapport signal-bruit dans une autre bande de fréquences est plus élevé que celui de la propre station fixe, le rapport signal-bruit étant simultanément plus faible pour d'autres bandes de fréquences des autres stations fixes, et/ou le taux d'erreur binaire moyen/momentané de la propre liaison, le critère étant d'autant plus rempli que le taux d'erreur binaire de la propre liaison est élevé, et/ou
- le taux d'erreur binaire moyen/momentané d'autres liaisons, le critère étant d'autant plus rempli que le taux d'erreur binaire dans une autre bande de fréquences est plus faible que celui de la propre station fixe, le taux d'erreur binaire étant simultanément supérieur pour d'autres bandes de fréquences de l'autre station fixe, et/ou
- l'affaiblissement moyen/momentané de la propre liaison, le critère étant d'autant plus rempli que l'affaiblissement est élevé et/ou
- l'affaiblissement moyen/momentané d'autres liaisons, le critère étant d'autant plus rempli que l'affaiblissement dans une autre bande de fréquences est inférieur à celui de la propre station fixe, l'affaiblissement pour les autres bandes de fréquences étant simultanément supérieur à celui des autres stations fixes, et/ou
- le type de service et les exigences de service, le critère étant d'autant plus rempli que les exigences relatives au taux d'erreur binaire à l'égard du service concerné sont remplies et que le taux d'erreur est élevé, et/ou
- la fréquence Doppler maximale, le critère étant par exemple d'autant plus rempli que la fréquence Doppler maximale qui apparaît avec la liaison est élevée et/ou
- le spectre Doppler, le critère étant par exemple d'autant plus rempli qu'un paramètre qui caractérise la largeur du spectre Doppler est important et/ou
- la vitesse entre la station mobile et une ou plusieurs stations fixes, le critère étant par exemple d'autant plus rempli que la vitesse de la station mobile est élevée, et/ou
- la distance moyenne/momentanée entre la station mobile et une ou plusieurs stations fixes, la mesure de la distance permettant de déduire la vitesse et le critère étant par exemple d'autant plus rempli que la vitesse est élevée et/ou
- la statistique d'erreurs binaires, le critère étant d'autant plus rempli que les erreurs binaires avec une transmission par rafales augmente fortement vers le bord de la rafale, et/ou
- l'occupation momentanée des différentes bandes de fréquences, le critère étant d'autant plus rempli que l'occupation de la bande de fréquences à laquelle une procédure de commutation doit être effectuée est faible et que l'occupation de la bande de fréquences utilisée actuellement est élevée.

**6.** Procédé selon la revendication 1 ou 5, dans lequel les paramètres sont pourvus de poids et compensés mutuellement pour obtenir les valeurs de priorité.

**7.** Procédé selon l'une des revendications précédentes, dans lequel les mesures des paramètres sont effectuées tant dans le sens ascendant que dans le sens descendant

- sur la liaison dans la bande de fréquences utilisée pour la liaison entre la station mobile et la station fixe à laquelle la station mobile est affectée et/ou
- sur la liaison dans les bandes de fréquences non utilisées pour la liaison entre la station mobile et la station fixe à laquelle la station mobile est affectée, ou
- sur la liaison dans un certain nombre de ou dans toutes les bandes de fréquences entre la station mobile et la station fixe à laquelle la station mobile n'est pas affectée.

**8.** Procédé selon l'une des revendications précédentes, dans lequel les paramètres sont mesurés de sorte que pour chaque bande de fréquences et chaque station fixe des signaux de référence sont émis, qui sont reçus par la station mobile, les paramètres étant déterminés à partir des signaux de référence reçus.

9. Procédé selon l'une des revendications précédentes, dans lequel la mesure des paramètres s'effectue au moyen des séquences de formation ou des signaux-pilote ou des parties porteuses de données des signaux.

10. Procédé selon la revendication 1, dans lequel la décision d'un changement de bande de fréquences est prise centralement dans la station fixe.

11. Procédé selon la revendication 1, dans lequel la bande de fréquences à utiliser est définie au début de la liaison pour ne plus être changée par la suite.

12. Procédé selon la revendication 1, dans lequel la bande de fréquences à utiliser est définie au début de la liaison pour ne plus être changée que si un changement pour une station fixe est effectué.

13. Procédé selon la revendication 1, dans lequel la bande de fréquences à utiliser est fixée au début de la liaison et est modifiée à tout moment pendant la liaison si une commutation est affichée lors d'une évaluation des valeurs de priorité.

14. Procédé selon l'une des revendications précédentes, dans lequel dans le scénario au moins le système GSM et le système UMTS sont présents, dans lequel pour le cas d'un changement de bande de fréquences pendant une liaison entre différents types de transmission une procédure de commutation existe entre le système GSM et le système UMTS.

15. Equipement d'exploitation de système radio d'après le procédé selon la revendication 1, avec

    - un dispositif de mesure (2) pour un ou plusieurs paramètres de la transmission radio,
    - un dispositif d'évaluation (4) permettant de constater jusqu'à quel degré d'accomplissement les paramètres mesurés ou des combinaisons de ceux-ci remplissent les critères qui leur sont attribués, les critères étant sélectionnés en fonction d'un scénario respectif existant, par
    - un dispositif de calcul (10), dans lequel une valeur de priorité est calculée pour la liaison de transmission correspondante en prenant pour base les taux d'accomplissement des critères, et par
    - un dispositif (12) qui tient compte de la liaison de transmission avec la valeur de priorité correspondante lors de la procédure de commutation respectivement lors de la définition de l'attribution de fréquences respectivement de l'établissement de la liaison radio, pour définir la bande de fréquences à utiliser pour la transmission du signal.

16. Equipement selon la revendication 15, **caractérisé en ce que** le dispositif de mesure pour les paramètres comprend :

    - un dispositif de mesure de la puissance émettrice moyenne/momentanée, et/ou
    - un dispositif de mesure de la puissance réceptrice moyenne/momentanée des propres et/ou d'autres liaisons, et/ou
    - un dispositif de mesure du rapport signal-bruit moyen/momentané de la propre et/ou d'autres liaisons, et/ou
    - un dispositif de mesure du taux d'erreur binaire moyen/momentané de la propre et/ou d'autres liaisons, et/ou
    - un dispositif de mesure de l'affaiblissement moyen/momentané des propres et/ou d'autres liaisons, et/ou
    - un dispositif pour déterminer le type et les exigences de service, et/ou
    - un dispositif de mesure de la fréquence Doppler maximale, et/ou
    - un dispositif de mesure du spectre Doppler, et/ou
    - un dispositif de mesure de la vitesse entre la station mobile et/ou une ou plusieurs stations fixes, et/ou
    - un dispositif de mesure de la distance moyenne/momentanée entre la station mobile et/ou une ou plusieurs stations fixes, la vitesse étant déduite de la mesure de la distance et/ou
    - un dispositif de mesure de l'occupation momentanée des différentes bandes de fréquences.

17. Equipement selon la revendication 15 ou 16, **caractérisé en ce que** les équipements de mesure des paramètres sont prévus tant dans le sens ascendant que dans le sens descendant sur

    - la liaison dans la bande de fréquences utilisée pour la liaison entre la station mobile et la station fixe, à laquelle la station mobile est affectée, et/ou
    - sur la liaison dans des bandes de fréquences non utilisées pour la liaison entre la station mobile et la station fixe, à laquelle la station mobile est affectée, ou
    - sur la liaison dans un certain nombre de ou toutes les bandes de fréquences entre la station mobile et la station fixe, auxquelles la station mobile n'est pas affectée.

18. Equipement selon l'une des revendications 15 à 17, **caractérisé en ce que** les équipements de mesure des paramètres émettent des signaux de référence pour chaque bande de fréquences et chaque station fixe, qui sont reçus par la station mobile, les paramètres étant déterminés à partir des signaux de référence reçus.

**19.** Equipement selon l'une des revendications 15 à 17, **caractérisé en ce que** les équipements de mesure des paramètres exploitent des séquences de formation ou des signaux pilotes ou des parties porteuses de données des signaux.

**20.** Equipement selon l'une des revendications 15 à 19, **caractérisé par** un équipement central dans la station fixe pour décider si un changement de bande de fréquences doit être effectué ou non.

## FIG 1

```
                          ┌─────────────────────┐
                          │ Szenario-Eingabe/   │
                          │ Speicher-Einrichtung│──6
                          └─────────────────────┘
                                    ↕
2──┌──────────────┐       ┌─────────────────────┐
   │ Meßeinrichtung│      │ Kenngrößen/Kriterien-│
   └──────────────┘       │ Eingabe/Speicher-   │──8
          │               │ Einrichtung         │
          ↓               └─────────────────────┘
4──┌──────────────┐
   │ Bewertungs-  │
   │ einrichtung  │
   └──────────────┘
          │
          ↓
10─┌──────────────┐
   │ Rechen-      │
   │ einrichtung  │
   └──────────────┘
          │
          ↓
12─┌──────────────┐
   │ Handover-    │
   │ Einrichtung  │
   └──────────────┘
```

## FIG 2

● mobile Teilnehmer

⬤ Feststation des Funknetzbetreibers

Gruppe G1: mobiler Teilnehmer 3
Gruppe G2: mobile Teilnehmer 2, 5, 7, 10, 11
Gruppe G3: mobile Teilnehmer 1, 6, 8, 9, 12, 13, 15

Trägerfrequenzen F1 < Trägerfrequenzen F2 < Trägerfrequenzen F3

18